# EUROPÄISCHE PATENTANMELDUNG

(11) **EP 1 213 266 A1**
(43) Veröffentlichungstag der Anmeldung: **12.06.2002**
(21) Anmeldenummer: 01128589.7
(22) Anmeldetag: 30.11.2001
(51) Int. Cl.: C02F 3/20, C02F 3/10

(54) **Verfahren und Vorrichtung zur Behandlung von Flüssigkeiten**

(30) Priorität: 07.12.2000 DE 10060730
(71) Anmelder: MESSER GRIESHEIM GmbH, 65933 Frankfurt am Main (DE)
(72) Erfinder: Müller, Berthold, 47269 Krefeld (DE)

(57) **Zusammenfassung**

Die Erfindung betrifft ein Verfahren und eine Vorrichtung zur Behandlung von Flüssigkeiten, insbesondere zur biologischen Reinigung von organisch belasteten Abwässern in Behältern und Rohren, bei dem ein sauerstoffhaltiges Gas mittels einer in dem Behälter oder in der Rohrleitung angeordneten Begasungseinrichtung in das von Schadstoffen zur einigende Abwasser eingetragen wird.

Erfindungsgemäß wird dadurch, daß das sauerstoffhaltige Gas mittels einer Vielzahl von Schlauchausströmern (7) in das Abwasser eingetragen wird, ein feinblasiger und großflächiger und damit die Reinigungsleistung erhöhender Sauerstoff-Eintrag gewährleistet.

## Beschreibung

Die Erfindung betrifft ein Verfahren und eine Vorrichtung zur Behandlung von Flüssigkeiten, insbesondere zur biologischen Reinigung von organisch belasteten Abwässern in Behältern und Rohren, nach den Merkmalen des Oberbegriffs von Anspruch 1 und 5.

Beim Belebtschlammverfahren, der heute gängigen und wirtschaftlichen Form der biologischen Abwasserreinigung, ist die Sauerstoff-Eintragskapazität in der biologischen Stufe einer der wichtigsten begrenzenden Faktoren für die Reinigungsleistung und die Ablaufqualität.

Zum Sauerstoffeintrag in der biologischen Stufe finden unterschiedliche Sauerstoff-Eintragungsaggregate, wie beispielsweise Oberflächenbelüfter, Turbinenbegaser, Schlauchbegaser, Injektoren u. dergl., Verwendung.

Zur chargenweisen Abwasserreinigung werden vorzugsweise mit dem Absetzbecken von biologischen Kläranlagen gekoppelte, mit oder ohne Druck betriebene Behälter wie beispielsweise Oxidatoren und Bioreaktoren oder eine vertikale Rohranordnung aufweisende Deepshaft-Anlagen eingesetzt.

Dazu wird in das mit Schadstoffen belastete und mit aeroben Mikroorganismen versetzte, mittels einer Pumpe in einen Behälter oder ein Rohr geförderte Abwasser mit Hilfe eines mit Fremdenergie betriebenen Begasungsaggregates, wie beispielsweise eines Injektors, sauerstoffhaltiges Gas oder reiner Sauerstoff eingegast.

Das durch die den Sauerstoff aufnehmenden aeroben Mikroben von Schadstoffen gereinigte Abwasser wird wieder in die Kläranlage eingespeist und/oder aus der Kläranlage zur weiteren Verwendung abgezogen und/oder einer zusätzlichen Filtration, wie beispielsweise einer Membran- oder Ultrafiltration, unterzogen und/oder einem Absetzbecken zugeführt.

Das beim Filtrieren erzeugte Schlammkonzentrat wird aus der Anlage abgezogen. und/oder wieder der biologischen Stufe zugeführt.

Der Erfindung liegt daher die Aufgabe zugrunde, ein Verfahren und eine Vorrichtung der eingangs genannten Art zur Verfügung zu stellen, mittels denen ein kostengünstiger Sauerstoffeintrag in das Abwasser und damit eine höhere Reinigungsleistung ermöglicht wird.

Diese Aufgabe wird erfindungsgemäß mit einem Verfahren und einer Vorrichtung mit den Merkmalen von Anspruch 1 und 5 gelöst.

Der erfindungsgemäße, zum Eintragen von sauerstoffhaltigem Gas mit einem Sauerstoffanteil von bis zu 100 Vol.-% in das mit Schadstoffen belastete und mit aeroben Mikroorganismen versetzte Abwasser in einem Behälter oder in einem Rohr einer biologischen Abwasserreinigung einsetzbare Schlauchbegaser besteht aus einer Vielzahl von in Strömungsrichtung des Abwassers mittels mindestens einer an der Innenwandung des Reaktionsraumes lösbar befestigten oder durch eine Aufhängung in dem Reaktionsraum frei hängenden Halterung angeordneten, mit sehr feinen Poren ausgebildeten, endseitig verschlossenen Schlauchausströmer.

Durch die sich erst bei einem Überdruck von 0,5 bar öffnenden, also wie Rückschlagventile wirkenden und damit ein Eindringen von Abwasser in das Schlauchinnere verhindernden Schlauchporen wird das sauerstoffhaltige Gas großflächig und feinblasig in das mit Schadstoffen belastete und mit aeroben Mikroben versetzte Abwasser eingegast. Der dadurch schnell und vollständig in dem Abwasser dispergierte Sauerstoff bewirkt eine wesentlich höhere Abwasser-Sauerstoffzufuhr pro Zeiteinheit und damit eine höhere Reinigungsleistung als beim Einsatz der bisherigen, nur einen punktuellen Sauerstoffeintrag in das Abwasser zulassenden und zudem mit Fremdenergie betriebenen Begaser, wie beispielsweise Injektoren.

Die die Schlauchausströmer in dem Reaktionsraum der Behälter bzw. Rohre in unterschiedliche geometrische Formen mit variablem Durchmesser anordnende Halterung besteht aus einem mit einem Gasanschluß versehenen, vorzugsweise ringfömigen Gasverteiler mit einer Vielzahl von Ausströmöffnungen an denen jeweils ein Schlauchausströmer in Strömungsrichtung des Abwassers angeordnet ist.

Der erfindungsgemäße Schlauchbegaser kann sowohl aus einer die Vielzahl von Schlauchausströmern zu einem Kronenbegaser anordnenden Halterung als auch aus zwei die Vielzahl von Schlauchausströmern zu einem Ringbegaser anordnenden, unterschiedliche geometrische Formen und variable Durchmesser aufweisenden Halterungen aus einem korrosionsbeständigen Material, wie beispielsweise Edelstahl, bestehen.

Erfindungsgemäß ist die strömungseingangsseitig in dem Behälter oder in dem Rohr angeordnete Halterung als ein einen Gasanschluß mit eine Vielzahl von Ausströmöffnungen aufweisender Gasverteiler ausgebildet.

Das durch den Gasanschluß in die als Gasverteiler ausbildeten Halterung mit einem Sauerstoffgehalt von bis zu 100% einströmende Gas wird über die Vielzahl von Gasaustrittsöffnungen durch jeden Schlauchausströmer über die Vielzahl durch den Gasströmungsdruck geöffneten Schlauchporen großflächig und feinblasig in das durch den Schlauchbegaser fliessende, mit Schadstoffen belastete und mit aeroben Mikroorganismen versetzte Abwasser eingetragen.

Durch den somit schnell und vollständig in dem Abwasser dispergierten Sauerstoff werden durch die im Abwasser vorhandenen aeroben Mikroorganismen die in dem Abwasser vorhandenen Schadstoffe mit reduziertem Zeitaufwand und ohne Einsatz von Fremdenergie mikrobiell umgesetzt.

Das auf diese Weise von Schadstoffen gereinigte Abwasser wird wieder in die Kläranlage eingespeist und/oder einer weiteren Behandlung, wie beispielsweise einer Membran- oder Ultrafiltration, unterworfen und anschließend aus der Anlage abgezogen und seiner weiteren Verwendung zugeführt. Das bei der Abwasser-Filtration erzeugte Schlammkonzentrat wird ebenfalls wieder in die biologische Stufe eingespeist und/oder als Überschußschlamm aus der Anlage abgezogen.

Der speziell in Behältern und Rohranordnungen von biologischen Kläranlagen, insbesondere mit stark schwankender Auslastung und mit Kampagnenbetrieb ohne Fremdenergie einsetzbare Schlauchbegaser ermöglicht eine kostengünstige Abwasserreinigung mit hoher Reinigungsleistung.

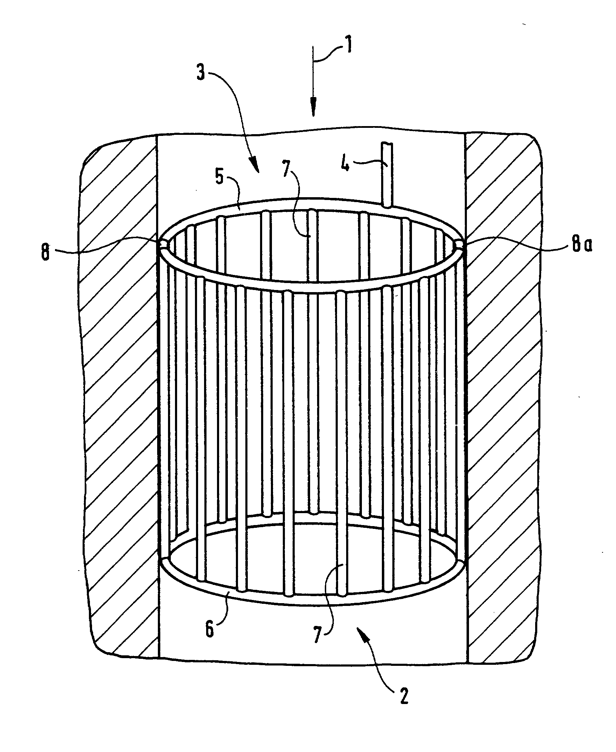

Nachfolgend wird die Erfindung anhand eines in der Zeichnung dargestellten Ausführungsbeispiels näher erläutert.

Der einzigen Figur der Zeichnung ist ein in einem rohrförmigen, biologischen Reaktionsraum 2 angeordneter Schlauchbegaser 3 zu entnehmen, durch den mit Schadstoffen belastetes und mit aeroben Mikroorganismen versetztes Abwasser in Pfeilrichtung 1 eingetragen wird. Der von dem Abwasser in Pfeilrichtung 1 durchströmte Schlauchbegaser 3 weist eine strömungseingangsseitig angeordnete und als Gasverteilerring mit einem Gasanschluß 4 und einer Vielzahl von Ausströmöffnungen ausgebildete und mittels Befestigungselemente 8, 8a an der Innenwandung des Reaktionsraumes 3 lösbar angeordnete Halterung 5 und eine strömungsausgangs-seitig angeordnete Halterung 6 auf. Mittels der Halterungen 5, 6 sind eine Vielzahl von mit sehr feinen Poren ausgebildeten Schlauchausströmern 7 in dem von dem Schadstoff belasteten Abwasser durchströmten rohrförmigen Reaktionsraum 2 beabstandet zueinander als Ringbegaser angeordnet.

Die funktionssichernde Stabilität der mittels der Halterungen 5, 6 im Reaktionsraum 3 zu einem Ringbegaser angeordneten Schlauchausströmer 7 wird durch den in jedem Schlauchausströmer 7 in Abwasser-Strömungsrichtung wirkenden Gasdruck gewährleistet.

Die aus Gummi (EPDM) bestehenden und mit einer Vielzahl von sehr feinen Poren perforierten Begasungsschläuche 7 weisen variable Innendurchmesser, Wandstärken und Längen auf.

In das mit Pfeilrichtung 1 durch den in dem rohrförmigen Reaktionsraum 2 angeordneten Schlauchbegaser 3 mit 60 m³/h unter einem Druck von 2 bar bei einer Temperatur von 30 °C durch den Schlauchbegaser 3 fliessende, mit Schadstoffen belastete und mit aeroben Mikroorganismen versetzte Abwasser wird über die Schlauchausströmer 7 ein sauerstoffhaltiges Gas mit einem Sauerstoffgehalt von bis zu 100 Vol.-% eingetragen.

Dazu wird der gasförmige Sauerstoff mit 25 Nm³/h mit einem Druck von mindestens 3 bar mit einer Temperatur von ca. 15 °C durch den Gasanschluß 4 in die als Gasverteilerring ausgebildete, strömungseingangsseitig angeordnete Halterung 5 eingetragen und strömt durch die Vielzahl von Ausströmöffnungen der Halterung 5 durch die an jeder Ausströmöffnungen befestigten Begasungsschläuche 7 über die durch den Gasströmungsdruck geöffneten Poren in das mit Schadstoffen belastete und mit Mikroorganismen versetzte Abwasser ein.

Das auf vorbeschriebene Weise in das Abwasser großflächig und feinblasig eingegaste sauerstoffhaltige Gas dispergiert schnell und vollständig in dem Abwasser. Durch die den Sauerstoff aufnehmenden Mikroorganismen werden die im Abwasser enthaltenen Schadstoffe zu den unschädlichen Stoffwechselprodukten Wasser und Kohlendioxid umgesetzt. Als Nebenprodukt entstehen neue Mikroorganismen und extrazelluare Polymere.

Das somit mikrobiell gereinigte Abwasser wird anschliessend zusammen mit dem Abgas aus dem rohrförmigen biologischen Reaktionsraum abgezogen und wieder in die biologische Stufe der Kläranlage eingespeist und/oder durch eine anschließende Sedimentation oder Filtration, beispielsweise durch eine Membran- oder Ultrafiltration, von seinen Feststoffbestandteilen (Bioschlamm) befreit. Das bei der Filtration anfallende Schlammkonzentrat wird aus der Anlage als Überschußschlamm abgezogen und/oder ebenfalls wieder in die biologische Stufe der Abwasserrreinigung eingespeist.

## Patentansprüche

1. Verfahren zur Behandlung von Flüssigkeiten, insbesondere zur biologischen Reinigung von organisch belasteten Abwässern in Behältern und Rohren, bei dem ein sauerstoffhaltiges Gas in das mit Schadstoffen belastete und mit aeroben Mikroorganismen versetzte Abwasser eingegast wird,
**dadurch gekennzeichnet, daß** das sauerstoffhaltige Gas mittels einer Vielzahl von Schlauchausströmern (7) in das Abwasser eingegast wird.

2. Verfahren nach Anspruch 1, **dadurch gekennzeichnet, daß** das sauerstoffhaltige Gas mittels einer Vielzahl von durch mindestens eine Halterung (5) in Strömungsrichtung des Abwassers angeordneten Schlauchausströmern (7) in das Abwasser eingetragen wird.

3. Verfahren nach Anspruch 1, **dadurch gekennzeichnet, daß** das sauerstoffhaltige Gas über einen Gasanschluß (4) der als Gasverteiler ausgebildeten Halterung (5) und über eine Vielzahl von Ausströmöffnungen der Halterung (5) den an jeder Ausströmöffnung angeordneten Schlauchausströmer (7) zugeführt und über eine Vielzahl von in der Schlauchwand vorhandenen Poren in das Abwasser eingetragen wird.

4. Verfahren nach einem der Ansprüche 1 bis 3, **dadurch gekennzeichnet, daß** Gas mit einem Sauerstoffanteil von bis zu 100 Vol.-% in das mit Schadstoffen belastete und mit aeroben Mikroben versetzte Abwasser eingetragen wird.

5. Vorrichtung zur Behandlung von Flüssigkeiten nach einem der Ansprüche 1 bis 4, **gekennzeichnet durch** eine Vielzahl von mittels mindestens einer Halterung (5) in Strömungsrichtung des Abwassers angeordneten Schlauchausströmern (7).

6. Vorrichtung nach Anspruch 5, **gekennzeichnet durch** eine Vielzahl von bevorzugt mittels zweier Halterungen (5, 6) in Strömungsrichtung des Abwassers zu einem Ringbegaser angeordneten Schlauchausströmern (7).

7. Vorrichtung nach Anspruch 5 oder 6, **dadurch gekennzeichnet, daß** die mit einer Vielzahl von Gasausströmöffnungen ausgebildete Halterung (5) vorzugsweise als ein mit einem verschließbaren Gasanschluß (4) versehener Gasverteilerring ausgebildet ist.

8. Vorrichtung nach einem der Ansprüche 5 bis 7, **dadurch gekennzeichnet, daß** die Halterungen (5, 6) variable Durchmesser aufweisen.

9. Vorrichtung nach einem der Ansprüche 5 bis 8, **dadurch gekennzeichnet, daß** die Halterungen (5; 6) aus einem korrosionsbeständigen Material, vorzugsweise aus Edelstahl, bestehen.

10. Vorrichtung nach einem der Ansprüche 5 bis 9, **dadurch gekennzeichnet, daß** die mit einer Vielzahl von unterschiedlichen Poren ausgebildeten Schlauchausströmer (7) unterschiedliche Wandstärken, Längen und Durchmesser aufweisen.

11. Vorrichtung nach einem der Ansprüche 5 bis 10, **dadurch gekennzeichnet, daß** mindestens die Halterung (5) mittels Halterungen (8, 8a) an der Innenwandung des Reaktionsraumes (3) lösbar befestigt oder durch eine Aufhängung frei hängend in dem Reaktionsraum (3) angeordnet ist.

12. Vorrichtung nach einem der vorhergehenden Ansprüche, **dadurch gekennzeichnet, daß** die Schlauchausströmer (7) mittels der als Gasverteilerring ausgebildeten Halterung (5) als Kronenbegaser in dem Reaktionsraum (3) angeordnet sind.
